# EUROPÄISCHE PATENTANMELDUNG

(11) **EP 3 026 267 A1**
(43) Veröffentlichungstag der Anmeldung: **01.06.2016**
(21) Anmeldenummer: 14194630.1
(22) Anmeldetag: 25.11.2014
(51) Int. Cl.: F04B 53/10, B05C 17/005, F16K 11/048, F16K 15/06

(54) **Pumpe, insbesondere zum dosierten Abgeben eines Fluids**

(71) Anmelder: HILTI Aktiengesellschaft, 9494 Schaan (LI)
(72) Erfinder: Wolf, Matthias, 82205 Gilching (DE); Ludwig, Wolfgang, 86874 Zaisertshofen (DE)
(74) Vertreter: Hilti Aktiengesellschaft Corporate Intellectual Property

(57) **Zusammenfassung**

Die Erfindung betrifft eine Pumpe mit einem Arbeitsraum, einem Einlasskanal zum Zuführen von Fluid in den Arbeitsraum, einem Auslasskanal zum Abführen von Fluid aus dem Arbeitsraum, einem Einlassventil mit einem Einlassventilorgan zum Absperren eines Rückflusses von Fluid aus dem Arbeitsraum in den Einlasskanal, und einem Auslassventil mit einem Auslassventilorgan zum Absperren eines Rückflusses von Fluid aus dem Auslasskanal in den Arbeitsraum. Erfindungsgemäss ist vorgesehen, dass das Einlassventilorgan und das Auslassventilorgan so in mechanischer Wirkverbindung miteinander stehen, dass das Auslassventil schliesst, wenn das Einlassventil öffnet, und das Einlassventil schliesst, wenn das Auslassventil öffnet.

## Beschreibung

Die Erfindung betrifft eine Pumpe, insbesondere zum dosierten Abgeben eines Fluids, vorzugsweise zum dosierten Abgeben eines Druckfluids, gemäss dem Oberbegriff des Anspruchs 1. Eine solche Pumpe ist ausgestattet mit einem Arbeitsraum, einem Einlasskanal zum Zuführen von Fluid in den Arbeitsraum, einem Auslasskanal zum Abführen von Fluid aus dem Arbeitsraum, einem Einlassventil mit einem Einlassventilorgan zum Absperren eines Rückflusses von Fluid aus dem Arbeitsraum in den Einlasskanal, und einem Auslass-ventil mit einem Auslassventilorgan zum Absperren eines Rückflusses von Fluid aus dem Auslasskanal in den Arbeitsraum.

Pumpen werden zum Fördern von verschiedensten Fluiden verwendet. Um das Fördern zu ermöglichen, sind vielfach Ein- und Auslassventile vorgesehen. Diese Ventile sind im Stand der Technik häufig Rückschlagventile, die sich beim Fördern der Masse selbstständig öffnen und mittels zusätzlicher Rückstellorgane (zum Beispiel Druckfedern) selbstständig wieder schließen. Solche Rückschlagventile arbeiten eigenständig, sind zwangsgesteuert und unabhängig voneinander.

Aufgabe der Erfindung ist es, eine Pumpe anzugeben, die bei einem besonders einfachen und kompakten Aufbau, insbesondere hinsichtlich ihrer Ventile, besonders zuverlässig und präzise im Betrieb und kostengünstig in der Herstellung ist.

Die Aufgabe wird erfindungsgemäss durch eine Pumpe mit den Merkmalen des Anspruchs 1 gelöst. Bevorzugte Ausführungsformen sind in den abhängigen Ansprüchen angegeben.

Eine erfindungsgemässe Pumpe ist dadurch gekennzeichnet, dass das Einlassventilorgan und das Auslassventilorgan so in mechanischer Wirkverbindung miteinander stehen, dass das Auslassventil schliesst, wenn das Einlassventil öffnet, und das Einlassventil schliesst, wenn das Auslassventil öffnet.

Ein Grundgedanke der Erfindung kann darin gesehen werden, das Einlassventilorgan und das Auslassventilorgan mechanisch so zu koppeln, dass sich die beiden Ventilorgane gegenseitig betätigen, und zwar in gegensätzlicher Art und Weise, das heisst dass ein Öffnen eines der beiden Ventile bewirkt, dass das jeweils andere Ventil schliesst. Durch das Öffnen des einen Ventiles wird also das andere Ventil geschlossen und umgekehrt. Hierdurch kann die Anzahl der benötigten Rückstellorgane, wie beispielsweise Rückstell-Druckfedern, reduziert werden, wobei es je nach Anwendung auch möglich sein kann, auf Rückstellorgane gänzlich zu verzichten. Folglich kann die Zahl der erforderlichen Einzelteile und somit der Herstellungsaufwand reduziert und eine besonders kompakte Bauweise realisiert werden.

Darüber hinaus kann erfindungsgemäss auch eine besonders hohe Präzision bei Fördermenge erhalten werden. Denn bei Pumpen mit unabhängig voneinander zwangsgesteuerten, insbesondere federbetätigten Ventilen kann es zu Ungenauigkeiten beispielsweise aufgrund herstellungsbedingter Schwankungen bei der Federvorspannung oder/und aufgrund mit der Zeit nachlassender Federsteifigkeit kommen. Diese Effekte werden durch die erfindungsgemässe direkte Kombination der Ein- und Auslassventile, bei der beide Ventile produktgesteuert arbeiten können, vermieden, so dass der Volumenstrom besonders genau definiert werden kann.

Die erfindungsgemässe Pumpe kann insbesondere zur Mengendosierung verwendet werden. Demgemäss kann die Pumpe vorzugsweise eine Dosierpumpe sein. Für einen besonders zuverlässigen Betrieb kann das Fluid im Einlasskanal einen Überdruck gegenüber dem Auslasskanal aufweisen und insbesondere aus einem Druckbehälter in den Einlasskanal zugeführt werden. Dieser Überdruck kann das Einlassventilorgan zumindest mitbetätigen. Bei einer solchen fluidvordruckgesteuerten Ventilanordnung kann eine besonders genaue Kraftkonstanz des Öffnungs- und Schließprozesses gegeben sein und somit die Präzision noch weiter gesteigert werden. In diesem Zusammenhang kann ein unerwünschter Abfluss des unter Überdruck stehenden Fluids, insbesondere eine unerwünschte Entleerung des Fluidbehälters bei längerer Nichtbenutzung der Pumpe, durch die erfindungsgemäss direkte Kombination der Ein- und Auslassventile zuverlässig verhindert werden.

Besonders bevorzugt ist es, dass das Einlassventilorgan ein Ventilteller ist, dass das Auslassventilorgan ein Ventilteller ist, und dass das Einlassventilorgan und das Auslassventilorgan an einem gemeinsamen Ventilstössel angeordnet sind. Hierdurch ist eine besonders einfache und zugleich zuverlässige Bauform gegeben. Insbesondere sind die beiden Ventilorgane zumindest axial, bezogen auf die Längsachse des Ventilstössels, fest am Ventilstössei angeordnet. Die Längsachse des Ventilstössels verläuft vorzugsweise durch die beiden Ventilorgane hindurch.

Die beiden Ventilorgane sind zweckmässigerweise an gegenüberliegenden Enden des Ventilstössels angeordnet, wodurch eine besonders einfache und kompakte Bauform erhalten werden kann. Der Ventilstössel kann aber auch über eines der Ventilorgane oder über beide Ventilorgane überstehen, was beispielsweise dann vorteilhaft sein kann, wenn eine Steuerungsfunktion für das Ventil realisiert werden soll.

Die beiden Ventilorgane und der gemeinsame Ventilstössel könnten beispielsweise im Längsschnitt Z-förmig angeordnet sein. Bevorzugt ist es jedoch, dass das Einlassventilorgan im Längsschnitt auf zwei gegenüberliegenden Seiten vom Ventilstössel vorsteht und/oder dass das Auslassventilorgan im Längsschnitt auf zwei gegenüberliegenden Seiten vom Ventilstössel vorsteht. Insbesondere können das Einlassventilorgan, das Auslassventilorgan und der Ventilstössel im Längsschnitt zusammen eine Doppel-T-Form, das heisst eine I-Form, bilden. Hierdurch können Kippmomente reduziert und somit die Betriebszuverlässigkeit noch weiter verbessert werden. Besonders bevorzugt kann vorgesehen sein, dass das Einlassventilorgan, das Auslassventilorgan und der gemeinsame Ventilstössel koaxial angeordnet sind, was die Betriebszuverlässigkeit noch weiter steigern kann.

Das Einlassventilorgan, das Auslassventilorgan und der Ventilstössel können insbesondere einstückig ausgebildet sein, was den Herstellungsaufwand weiter reduzieren und die die Betriebszuverlässigkeit weiter erhöhen kann.

Eine vorteilhafte Weiterbildung der Erfindung liegt darin, dass der Einlasskanal, vorzugsweise endseitig, einen Ringraum aufweist, der den Ventilstössel ringförmig, vorzugsweise in Form eines geschlossenen Ringes, umgibt, und der vorzugsweise vom Einlassventilorgan verschlossen werden kann. Hierdurch kann der konstruktive Aufwand noch weiter reduziert werden. Im Ringraum können auch ein oder mehrere Stege, beispielsweise Führungselemente für den Ventilstössel, vorgesehen sein, die den Ringraum zumindest teilweise in Kammern unterteilen. Der Ringraum kann auch einen Deckel mit Durchgangsöffnungen aufweisen, wobei dann das Einlassventilorgan zum Verschliessen des Ringraums auf den Deckel wirken kann.

Eine weitere vorteilhafte Ausgestaltung der Erfindung liegt darin, dass das Auslassventilorgan radial weiter vom Ventilstössel weg reicht als das Einlassventilorgan. Hierdurch kann der konstruktive Aufwand noch weiter verringert werden. Insbesondere kann das Auslassventilorgan oberflächengrösser als das Einlassventilorgan sein.

Die Axialrichtung, Längsrichtung und Radialrichtung können im Zusammenhang mit der Erfindung insbesondere auf die Längsachse des Ventilstössels bezogen verstanden werden.

Bevorzugt weist der Auslasskanal zumindest einen Steuerungskanalabschnitt auf, der vom Arbeitsraum zum Auslassventilorgan führt. Für einen besonders einfach herstellbaren und kompakten Aufbau kann der Steuerungskanalabschnitt parallel zum Ventilstössel verlaufen. Es können auch mehrere Steuerungskanalabschnitte vorgesehen werden, die hydraulisch parallel verlaufen. Diese Steuerungskanalabschnitte können bevorzugt auf einem Ring liegen, welcher den Ringraum des Einlasskanals umgibt.

Weiterhin ist es vorteilhaft, dass der Arbeitsraum, der Einlasskanal und der Auslasskanal in einem gemeinsamen Gehäuse ausgebildet sind. In diesem Gehäuse ist zweckmässigerweise auch der Ventilstössel gelagert. Hierdurch kann eine besonderes einfache und robuste Bauform gegeben sein.

Vorzugsweise kann dem Arbeitsraum ein oszillierender Verdränger zugeordnet sein. Insbesondere kann die Pumpe eine Membranpumpe sein.

Die erfindungsgemässe Pumpe kann insbesondere für hochviskose und/oder abrasive Fluide eingesetzt werden.

Die Erfindung betrifft auch ein Auspressgerät für eine erhärtbare Masse, mit einer erfindungsgemässen Pumpe, wobei das Fluid die erhärtbare Masse oder eine Komponente hiervon ist.

Die Erfindung wird nachfolgend anhand bevorzugter Ausführungsbeispiele näher erläutert, die schematisch in der beiliegenden Figur dargestellt sind. Es zeigt schematisch:

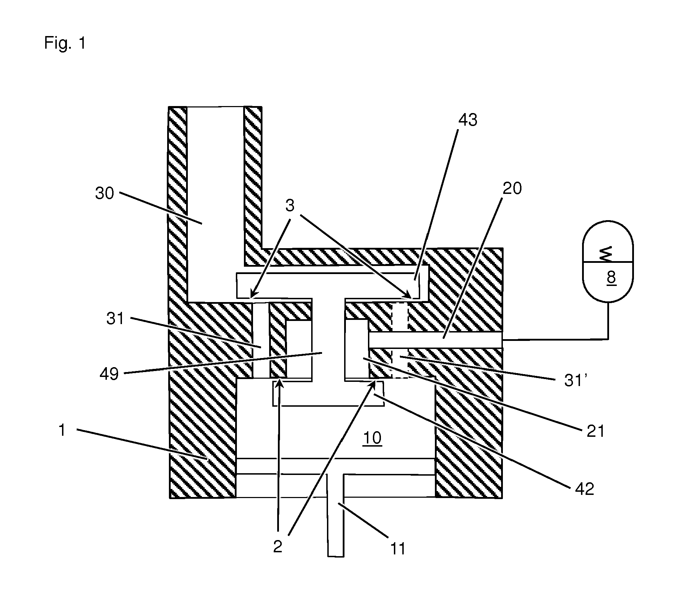

- Figur 1:: eine Längsschnittansicht eines Ausführungsbeispiels einer erfindungsgemässen Pumpe.

Ein Ausführungsbeispiel einer erfindungsgemässen Pumpe ist in Figur 1 gezeigt. Die Pumpe weist einen Arbeitsraum 10 auf, dem ein beispielhaft als Kolben dargestellter Verdränger 11 zum oszillierenden Verändern des Arbeitsraumvolumens zugeordnet ist. Die Pumpe weist ferner einen Einlasskanal 20 auf, der in den Arbeitsraum 10 mündet, und der mit einem Fluidbehälter 8 verbunden ist. Über diesen Einlasskanal 20 ist Fluid aus dem Fluidbehälter 8 in den Arbeitsraum 10 zuführbar. Die Pumpe weist überdies einen Auslasskanal 30 auf, der zum Abgeben von Fluid aus dem Arbeitsraum 10 vom Arbeitsraum 10 nach aussen führt.

Der Einlasskanal 20 weist endseitig einen Ringraum 21 auf, welcher einen weiter unten näher beschriebenen Ventilstössel 49 ringförmig umgibt, und welcher in den Arbeitsraum 10 mündet.

Zum Absperren eines unerwünschten Rückflusses von Fluid aus dem Arbeitsraum 10 in den Einlasskanal 20 zum Fluidbehälter 8 hin weist die Pumpe ein Einlassventil mit einem als Ventilteller ausgeführten Einlassventilorgan 42 auf, welches gegen eine am Einlasskanal 20 ausgebildete Einlassdichtfläche 2 wirkt, wobei die Einlassdichtfläche 2 vorzugsweise am Ringraum 21 des Einlasskanals 20 ausgebildet ist.

Zum Absperren eines unerwünschten Rückflusses von Fluid aus dem Auslasskanal 30 in den Arbeitsraum 10 weist die Pumpe ferner ein Auslassventil mit einem ebenfalls als Ventilteller ausgeführten Auslassventilorgan 43 auf, welches gegen eine am Auslasskanal 30 ausgebildete Auslassdichtfläche 3 wirkt. Die Auslassdichtfläche 3 ist insbesondere am Ende eines weiter unten näher beschriebenen Steuerungskanalabschnitts 31 des Auslasskanals 30 ausgebildet.

Das Auslassventilorgan 43 und das Einlassventilorgan 42 sind axial fest am gemeinsamen Ventilstössel 49 angeordnet, so dass eine axiale Verschiebung des Auslassventilorgans 43 eine gleich grosse axiale Verschiebung des Einlassventilorgans 42 bewirkt, und umgekehrt eine axiale Verschiebung des Einlassventilorgans 42 eine gleich grosse axiale Verschiebung des Auslassventilorgans 43 bewirkt. Infolgedessen stehen das Einlassventilorgan 42 und das Auslassventilorgan 43 so in mechanischer Wirkverbindung miteinander, dass das Auslassventil schliesst und den Auslasskanal 30 hydraulisch sperrt, wenn das Einlassventil öffnet und den Einlasskanal 20 hydraulisch freigibt, und dass umgekehrt das Einlassventil schliesst und den Einlasskanal 20 hydraulisch sperrt, wenn das Auslassventil öffnet und den Auslasskanal 30 hydraulisch freigibt.

Die Axialrichtung und die Radialrichtung können im Zusammenhang mit der Erfindung insbesondere auf die Längsachse des Ventilstössels 49 bezogen verstanden werden.

Der Auslasskanal 30 weist zumindest einen Steuerungskanalabschnitt 31 auf, welcher vom Arbeitsraum 10 zum Auslassventilorgan 43 führt. Im dargestellten Ausführungsbeispiel sind beispielhaft zwei Steuerungskanalabschnitte 31 und 31' dargestellt, die hydraulisch parallel verlaufen. Der zumindest eine Steuerungskanalabschnitt 31 verläuft vorzugsweise zumindest abschnittsweise in Axialrichtung, das heisst parallel zum Ventilstössel 49, und/oder ausgehend vom Ventilstössel 49 radial aussenseitig des Ringraums 21.

Im dargestellten Ausführungsbeispiel sind das Auslassventilorgan 43 und das Einlassventilorgan 42 jeweils endseitig am gemeinsamen Ventilstössel 49 angeordnet, so dass in der Schnittansicht der Figur 1 eine Doppel-T-Form gegeben ist. Grundsätzlich könnte der Ventilstössel 49 aber auch über ein Ventilorgan 42 oder 43 oder über beide Ventilorgane 42 und 43 hinaus verlängert sein. Das Auslassventilorgan 43 reicht radial weiter vom Ventilstössel 49 weg als das Einlassventilorgan 42, damit das Auslassventilorgan 43 die radial ausserhalb des Ringraums 21 angeordneten Steuerungskanalabschnitte 31, 31' abdichten kann.

Der Arbeitsraum 10, der Einlasskanal 20 mit dem Ringraum 21 und der Auslasskanal 30 mit dem zumindest einen Steuerungskanalabschnitt 31 sind in einem gemeinsamen Gehäuse 1 ausgebildet, nämlich als Ausnehmungen in diesem Gehäuse 1. In dem Gehäuse 1 ist auch der Ventilstössel 49 gelagert.

Ausserhalb des Ringraums 21 verläuft der Einlasskanal 20 zumindest annähernd senkrecht zum Ventilstössel 49, das heisst zumindest annähernd in Radialrichtung.

Die Pumpe kann insbesondere zum dosierten Abgeben des Fluids verwendet werden. Insbesondere bei hochviskosen Fluiden kann das Fluid mit Überdruck zugeführt werden. Demgemäss ist der Fluidbehälter 8 in Figur 1 beispielhaft mit einer Federspannvorrichtung gezeigt. Beispielsweise kann der Fluidbehälter 8 ein federgespannter Kunststoffschlauch sein.

Beim Betrieb der Pumpe gelangt das druckbeaufschlagte Fluid durch den Einlasskanal 20 in dessen Ringraum 21. Das druckbeaufschlagte Fluid trifft dort auf das als Ventilteller ausgebildete Einlassventilorgan 42 und übt auf dieses eine Kraft aus, welche zum Öffnen des Einlassventils führt. Da das Einlassventilorgan 42 über den Ventilstössel 49 axial fest mit dem Auslassventilorgan 43 verbunden ist, wird bei diesem Vorgang zugleich das ebenfalls als Ventilteller ausgebildete Auslassventilorgan 43 auf die Auslassdichtfläche 3 gedrückt, so dass das Auslassventil schliesst. Der Arbeitsraum 10 und der Steuerungskanalabschnitt 31 werden vollständig mit Fluid gefüllt und im Arbeitsraum 10 und im Steuerungskanalabschnitt 31 stellt sich derselbe Druck ein. Durch ein abgestimmtes Flächenverhältnis der beiden Ventile bleibt das Auslassventil geschlossen.

Nun wird der Verdränger 11 in den Arbeitsraum 10 eingefahren. Dieser Pumphub führt zu einer Druckerhöhung im Arbeitsraum 10 und im Steuerungskanalabschnitt 31. Diese Druckerhöhung wiederum führt zu einer erhöhten Kraft auf das Auslassventilorgan 43, was eine axiale Bewegung des Ventilstössels 49 bewirkt, bei der das Auslassventilorgan 43 von der Auslassdichtfläche 3 abhebt und zugleich das Einlassventilorgan 42 auf die Einlassdichtfläche 2 gedrückt wird. Das Auslassventil ist damit geöffnet und das Einlassventil geschlossen.

Beim anschliessenden Rückhub des Verdrängers 11 wirken der Druck im Auslasskanal 30 auslassseitig und der Sog des umgekehrten Pumphubs arbeitsraumseitig auf das Auslassventilorgan 43. Parallel hierzu wirken der gleiche Sog arbeitsraumseitig und das unter Druck stehende Fluid im Einlasskanal 20 einlasskanalseitig auf das Einlassventilorgan 42. Diese Druckverhältnisse führen zu einer Rückbewegung der Ventileinheit bestehend aus Einlassventilorgan 42, Auslassventilorgan 43 und Ventilstössel 49, welche das Auslassventil schliesst und das Einlassventil öffnet.

## Patentansprüche

1. Pumpe mit
einem Arbeitsraum (10),
einem Einlasskanal (20) zum Zuführen von Fluid in den Arbeitsraum (10),
einem Auslasskanal (30) zum Abführen von Fluid aus dem Arbeitsraum (10),
einem Einlassventil mit einem Einlassventilorgan (42) zum Absperren eines Rückflusses von Fluid aus dem Arbeitsraum (10) in den Einlasskanal (20), und
einem Auslassventil mit einem Auslassventilorgan (43) zum Absperren eines Rückflusses von Fluid aus dem Auslasskanal (30) in den Arbeitsraum (10),
**dadurch gekennzeichnet,**
**dass** das Einlassventilorgan (42) und das Auslassventilorgan (43) so in mechanischer Wirkverbindung miteinander stehen, dass das Auslassventil schliesst, wenn das Einlassventil öffnet, und das Einlassventil schliesst, wenn das Auslassventil öffnet.

2. Pumpe nach Anspruch 1,
**dadurch gekennzeichnet,**
**dass** das Einlassventilorgan (42) ein Ventilteller ist, dass das Auslassventilorgan (43) ein Ventilteller ist, und dass das Einlassventilorgan (42) und das Auslassventilorgan (43) an einem gemeinsamen Ventilstössel (49) angeordnet sind.

3. Pumpe nach Anspruch 2,
**dadurch gekennzeichnet,**
**dass** das Einlassventilorgan (42), das Auslassventilorgan (43) und der Ventilstössel (49) im Längsschnitt zusammen eine Doppel-T-Form bilden,
**dass** das Einlassventilorgan (42), das Auslassventilorgan (43) und der gemeinsame Ventilstössel (49) koaxial angeordnet sind, und/oder
**dass** das Einlassventilorgan (42), das Auslassventilorgan (43) und der Ventilstössel (49) einstückig ausgebildet sind.

4. Pumpe nach einem der Ansprüche 2 oder 3,
**dadurch gekennzeichnet,**
**dass** der Einlasskanal (20) einen Ringraum (21) aufweist, der den Ventilstössel (49) ringförmig umgibt, und der vom Einlassventilorgan (42) verschlossen werden kann.

5. Pumpe nach einem der Ansprüche 2 bis 4,
**dadurch gekennzeichnet,**
**dass** das Auslassventilorgan (43) radial weiter vom Ventilstössel (49) weg reicht als das Einlassventilorgan (42).

6. Pumpe nach einem der vorstehenden Ansprüche,
**dadurch gekennzeichnet,**
**dass** der Auslasskanal (30) zumindest einen Steuerungskanalabschnitt (31) aufweist, der vom Arbeitsraum (10) zum Auslassventilorgan (43) führt.

7. Pumpe nach einem der vorstehenden Ansprüche,
**dadurch gekennzeichnet,**
**dass** der Arbeitsraum (10), der Einlasskanal (20) und der Auslasskanal (30) in einem gemeinsamen Gehäuse (1) ausgebildet sind.

8. Pumpe nach einem der vorstehenden Ansprüche,
**dadurch gekennzeichnet,**
**dass** dem Arbeitsraum (10) ein oszillierender Verdränger (11) zugeordnet ist.

9. Auspressgerät für eine erhärtbare Masse, mit einer Pumpe nach einem der vorstehenden Ansprüche, wobei das Fluid die erhärtbare Masse oder eine Komponente hiervon ist.
